# EUROPEAN PATENT APPLICATION

(11) **EP 4 607 078 A1**
(43) Date of publication of application: **27.08.2025**
(21) Application number: 24808831.2
(22) Date of filing: 29.03.2024
(51) Int. Cl.: F16M 11/10, F16M 11/08

(54) **PITCH ANGLE ADJUSTMENT ASSEMBLY FOR DISPLAY**

(30) Priority: 12.01.2024 CN 202410051080
(71) Applicant: Anhui Hongjie Ergonomic Technology Co., Ltd., Xuancheng, Anhui 242200 (CN)
(72) Inventor: CHANG, Xiaojie, Xuancheng, Anhui 242200 (CN); ZHOU, Lei, Xuancheng, Anhui 242200 (CN)
(74) Representative: Mittler, Andrea
(86) International application number: PCT/CN2024/084952
(87) International publication number: WO 2025/148173

(57) **Abstract**

The present invention discloses a display up-and-down adjustment assembly, including a turning base, a panel assembly, and an adjustment structure, wherein the adjustment structure includes a positioning member, a clamping member, and a friction member; the positioning member has an outer wall and an inner wall; and an accommodation space is arranged between the outer wall and the inner wall, wherein the friction member is snapped in the accommodation space; the inner wall has an outer surface of the inner wall and an inner surface of the inner wall arranged to the outer surface of the inner wall; and the clamping member is snapped in the positioning member and abuts against the inner surface of the inner wall, so that the outer surface of the inner wall is in frictional contact with the friction member, wherein the display up-and-down adjustment assembly has a rotating up state and a rotating down state, and the turning base and the panel assembly are rotationally connected around a first axis line so as to switch between the rotating up state and the rotating down state, wherein when switching to the rotating up state, the positioning member, the friction member, the clamping member, and the panel assembly rotate in the same direction; and when switching to the rotating down state, the positioning member, the clamping member, and the panel assembly rotate in the same direction, and the unidirectional mechanism limiting the rotation of the friction member relative to the turning base is arranged between the friction member and the turning base.

## Description

### CROSS-REFERENCE TO RELATED APPLICATION

The present invention claims priority to Chinese patent Application No. 2024100510807, filed with the Chinese Patent Office on January 12, 2024, entitled "DISPLAY UP-AND-DOWN ADJUSTMENT ASSEMBLY", the entire contents of which are incorporated herein by reference.

### TECHNICAL FIELD

The present invention relates to the technical field of display mounting brackets, and specifically to a display up-and-down (rotating up and down) adjustment assembly.

### BACKGROUND ART

The display bracket in the prior art has a rotating up state and a rotating down state in order to meet requirements of users, and the conversion between the rotating up state and the rotating down state is specifically realized by providing a panel assembly, a turning base, and an adjustment structure arranged between the panel assembly and the turning base. After the display is assembled on the panel assembly, when it needs to be adjusted to the rotating up state, the user needs to withstand the frictional resistance and the gravity of the display, which makes it hard to adjust; and when it needs to be adjusted to the rotating down state, the adjustment is relatively easy with the assistance of the gravity of the display, which results in a larger difference of the output forces during adjustment by the user, so as to affect the experience of use.

### SUMMARY

An object of the present invention is to provide a display up-and-down adjustment assembly to overcome deficiencies in the prior art.

In order to realize the above object, the present invention adopts the following technical solutions.

A display up-and-down adjustment assembly includes a turning base arranged on a supporting base, a panel assembly configured to mount the display, and an adjustment structure arranged between the turning base and the panel assembly, wherein the adjustment structure includes a positioning member, a clamping member, and a friction member; the positioning member has an outer wall and an inner wall, and an accommodation space is arranged between the outer wall and the inner wall, wherein the friction member is at least partially snapped in the accommodation space; the inner wall has an outer surface of the inner wall and an inner surface of the inner wall arranged opposite to the outer surface of the inner wall; and the clamping member is snapped in the positioning member and abuts against the inner surface of the inner wall, so that the outer surface of the inner wall is in frictional contact with the friction member, wherein the display up-and-down adjustment assembly has a rotating up state and a rotating down state, and the turning base and the panel assembly are rotationally connected around a first axis line so as to switch between the rotating up state and the rotating down state, wherein when switching to the rotating up state, the positioning member, the friction member, the clamping member, and the panel assembly rotate in the same direction; and when switching to the rotating down state, the positioning member, the clamping member, and the panel assembly rotate in the same direction, wherein an unidirectional mechanism limiting a rotation of the friction member relative to the turning base is arranged between the friction member and the turning base.

In one embodiment, the positioning member includes a side wall extending in an up and down direction, an outer wall extending in a left and right direction, and an inner wall extending in a right and left direction, wherein end parts of the outer wall and the inner wall in the left and right direction are connected to the side wall respectively.

In one embodiment, a cross section of the side wall is of a circle, wherein the cross section of the outer wall is a circular ring formed by centering on a center of the circle, and a cross section of the inner wall is a circular arc formed by centering on the center of the circle.

In one embodiment, two circular arcs are provided, and two notches are formed between two circular arcs, wherein the clamping member is provided with two protrusion parts respectively snapped in two notches.

In one embodiment, the unidirectional mechanism includes an unidirectional gear and a bevel gear cooperatively engaged with the unidirectional gear, wherein a linkage structure is arranged between the unidirectional gear and the friction member, wherein the unidirectional gear rotates synchronously around the first axis line with the friction member by the linkage structure; the bevel gear is rotationally connected to the turning base around a second axis line; and an elastic member further arranged between the bevel gear and the turning base, wherein the bevel gear rotates around the second axis line by the elastic member in a direction tending to the unidirectional gear.

In one embodiment, the positioning member, the friction member, the clamping member, the unidirectional gear, and the panel assembly rotate in the same direction when switching to the rotating up state, and the friction member and the unidirectional gear are fixed relative to the turning base when switching to the rotating down state.

In one embodiment, the first axis line extends in the left and right direction, and/or, the second axis line extends in the left and right direction, and/or, the first axis line and the second axis line are arranged in parallel.

In one embodiment, the linkage structure consists of one or more holes and one or more bumps, wherein the holes are arranged on one of the friction member and the unidirectional gear, and the bumps are arranged on the other of the friction member and the unidirectional gear, wherein the bumps are snapped in the holes.

In one embodiment, a mating structure is arranged between the panel assembly and the positioning member, wherein the mating structure consists of a mating groove arranged on one of the panel assembly and the positioning member and a mating bump arranged on the other of the two.

In one embodiment, the display up-and-down adjustment assembly further includes a connection member, wherein the connection member passes through the panel assembly, the positioning member, and the clamping member in the left and right direction in sequence.

In one embodiment, the positioning member includes a left positioning member and a right positioning member; the clamping member includes a left clamping member and a right clamping member; and the friction member includes a left friction member and a right friction member, wherein the unidirectional mechanism cooperates with the left friction member and the right friction member respectively, so as to synchronously limit a rotation of the left friction member and the right friction member relative to the turning base.

Due to the application of the above technical solutions, the present invention has the following advantages compared with the prior art. In the display up-and-down adjustment assembly of the present invention, the unidirectional mechanism is provided. When switching to the rotating up state, since the positioning member, the friction member, and the clamping member rotate synchronously, the user needs to overcome the gravity of the display but does not need to overcome the frictional resistance between the friction member and the positioning member. When switching to the rotating down state, since the friction member and the positioning member do not rotate synchronously, the user needs to overcome the frictional resistance between the friction member and the positioning member with the assistance of the gravity of the display. In this way, it is easier when switching to the rotating up state, and it also reduces the difference of output forces between switching to the rotating up state and switching to the rotating down state, which improves the user experience.

### BRIEF DESCRIPTION OF DRAWINGS

FIG. 1 is an exploded diagram of a display up-and-down adjustment assembly of the present invention;
FIG. 2 is a side view of a display up-and-down adjustment assembly of the present invention in a flat view state;
FIG. 3 is a side view of a display up-and-down adjustment assembly of the present invention in a rotating up state;
FIG. 4 is a side view of a display up-and-down adjustment assembly of the present invention in a rotating down state;
FIG. 5 is a sectional view of a display up-and-down adjustment assembly of FIG. 2 in A-A direction; and
FIG. 6 is a schematic diagram of an unidirectional mechanism of a display up-and-down adjustment assembly of the present invention.

### Reference numbers:

1-turning base; 111-inner cavity; 2-panel assembly; 21-left mating groove; 22-right mating groove; 31-left positioning member; 32-right positioning member; 33-side wall; 34-outer wall; 341-outer surface of the outer wall; 35-inner wall; 351-outer surface of the inner wall; 352-inner surface of the inner wall; 36-accommodation space; 37-snapping space; 38-mating bump; 39-notch; 41-left friction member; 42-right friction member; 43-side wall of the friction member; 44-extension part of the friction member; 45-hole; 51-left clamping member; 52-right clamping member; 53-outer surface of the clamping member; 54-protrusion part; 6-unidirectional gear; 61-bump; 7-bevel gear; 8-torsion spring; 91-left connection member; and 92-right connection member.

### DETAILED DESCRIPTION OF EMBODIMENTS

The technical solutions of the present invention are further described below in connection with the drawings and specific embodiments.

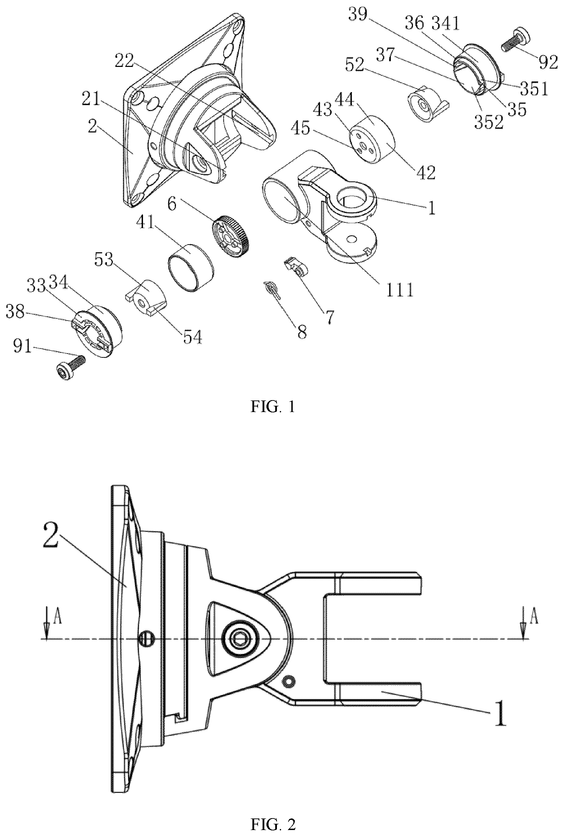

In the description of the present invention, the directions of "front", "back", "left", "right", "up", and "down", etc. are defined with reference to the directions observed by the user in use, i.e., as shown in FIG. 2, the left direction of the figure is "front"; the right direction of the figure is "back"; the up direction of the figure is "up"; the down direction of the figure is "down"; and the directions perpendicular to the views in the figure are "left" and "right". The definitions for the above directions are only to facilitate the description of the present invention and simplify the description, and are not to indicate or imply that the device or component referred to must have a particular orientation, or be constructed and operated with a particular orientation, and therefore cannot to be understood as limitations of the present invention.

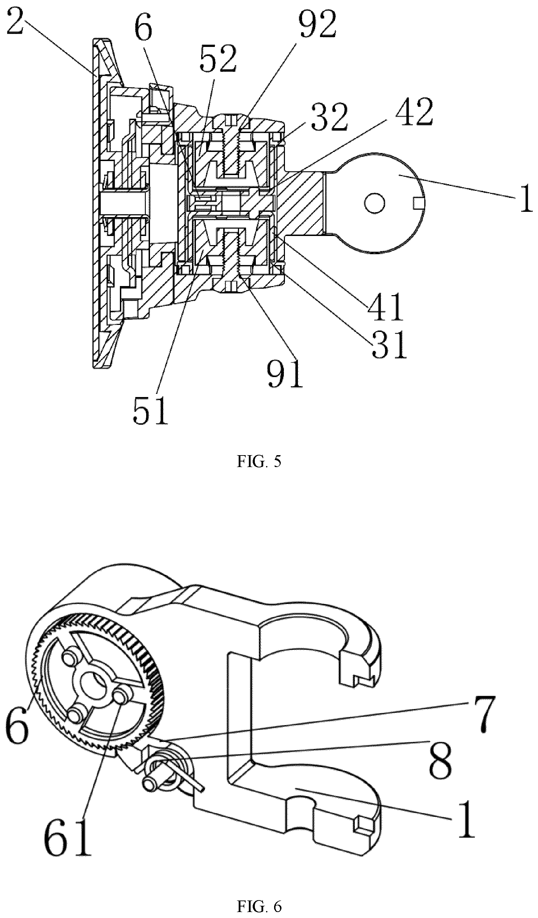

Referring to FIG. 1- FIG. 6, a display up-and-down adjustment assembly of the present invention includes a turning base 1 arranged on a supporting base (not shown in the figures), a panel assembly 2 configured to mount the display (not shown in the figures), and an adjustment structure arranged between the turning base 1 and the panel assembly 2.

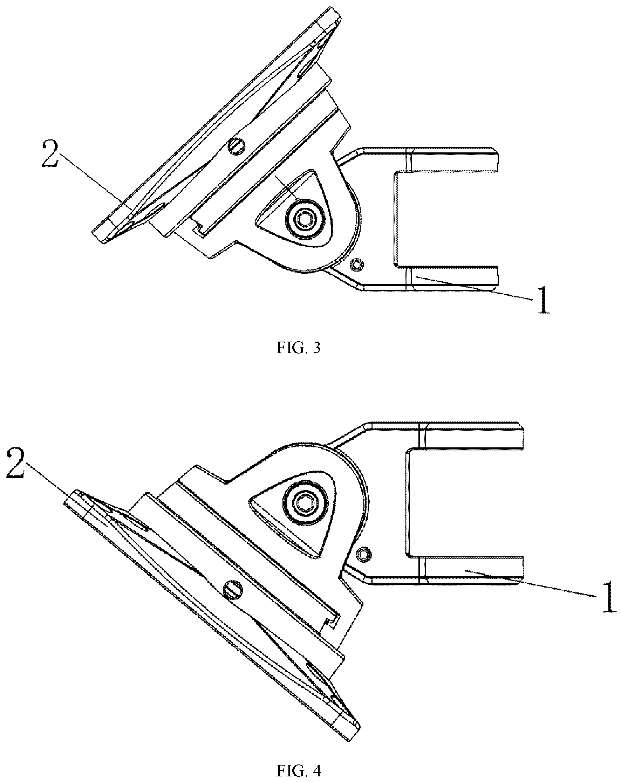

The turning base 1 is rotationally connected to the panel assembly 2 around a first axis line extending in a left and right direction, so as to adjust the looking-down and looking-up angle between the turning base 1 and the panel assembly 2. In order to provide a comfortable viewing experience for the user, the adjustment structure provides friction for the rotational connection between the turning base 1 and the panel assembly 2, so that the panel assembly 2 can stay at the angle desired by the user. Specifically, the display up-and-down adjustment assembly has a rotating up state, a rotating down state, and a flat view state. As shown in FIG. 2, when being in the flat view state, the cross section of the panel assembly 2 extends vertically in the up and down direction; as shown in FIG. 3, when being in the rotating up state, the cross section of the panel assembly 2 extends obliquely in the front and back direction towards upside; and as shown in FIG. 4, when being in the rotating down state, the cross section of the panel assembly 2 extends obliquely in the front and back direction towards downside.

The adjustment structure includes a positioning member, a friction member, a clamping member, and a connection member.

The positioning member includes a side wall 33 extending in the up and down direction, an outer wall 34 extending in the left and right direction, and an inner wall 35 extending in the right and left direction, wherein end parts of the outer wall 34 and the inner wall 35 in the left and right direction are connected to the side wall 33 respectively. A cross section of the side wall 33 is of a circle, wherein the cross section of the outer wall 34 is a circular ring formed by centering on a center of the circle, and the cross section of the inner wall 35 is a circular arc formed by centering on the center of the circle. The outer wall 34 is arranged on a periphery of the inner wall 35, and an accommodation space 36 is arranged between the outer wall 34 and the inner wall 35. The outer wall 34 has an outer surface of the outer wall 341 and an inner surface of the outer wall arranged opposite to the outer surface of the outer wall 341, and the inner wall 35 has an outer surface of the inner wall 351 and an inner surface of the inner wall 352 arranged opposite to the outer surface of the inner wall 351, wherein the accommodation space 36 is formed by the outer surface of the inner wall 351 and the inner surface of the outer wall, and the snapping space 37 for accommodating the clamping member is formed by the inner surface of the inner wall 352. The positioning member is placed in the turning base 1, and the outer surface of the outer wall 341 is arranged close to the inner cavity 111 of the turning base 1. A mating structure is arranged between the panel assembly 2 and the positioning member, wherein the mating structure consists of a mating groove arranged on one of the panel assembly 2 and the positioning member and a mating bump 38 arranged on the other of the two, wherein the positioning member and the panel assembly 2 can rotate synchronously around the first axis line by providing the mating structure.

The friction member has a side wall of the friction member 43 and an extension part of the friction member 44. The side wall of the friction member 43 extends in the up and down direction, and the cross section of the side wall of the friction member 43 is of a circle, wherein the cross section of the extension part of the friction member 44 is a circular ring formed by centering on a center of the circle of the cross section of the side wall of the friction member 43; and the extension part of the friction member 44 extends in the left and right direction, wherein the end part in the left and right direction is connected to the side wall of the friction member 43, and the other end part is snapped in the accommodation space 36 formed by the outer wall 34 and the inner wall 35 of the positioning member, i.e., at least part of the friction member is snapped in the accommodation space 36.

The clamping member is arranged in the snapping space 37 and is located between the friction member and the positioning member, wherein the clamping member has an outer surface of the clamping member 53 abutting against the inner surface of the inner wall 352 of the positioning member, so that the inner wall 35 is supported and opened from the inside to outside and the outer surface of the inner wall 351 is in frictional contact with the friction member. In the embodiment, the outer surface of the clamping member 53 and the inner surface of the inner wall 352 both gradually extend obliquely in the left and right direction from the outside to the inside, so that the clamping member can be tightly snapped in the snapping space 37. In other embodiments, the outer surface of the clamping member 53 and the inner surface of the inner wall 352 can also be arranged parallel to the first axis line, and a synchronous structure is also arranged between the clamping member and the positioning member. Specifically, in the embodiment, the synchronous structure includes notches 39 and protrusion parts 54, wherein two circular arcs are provided, and two notches 39 are formed between two circular arcs, wherein the clamping member is provided with two protrusion parts 54 respectively snapped in two notches 39, and the clamping member and the positioning member can synchronously rotate around the first axis line by the cooperation of the notches 39 and the protrusion parts 54.

An unidirectional mechanism limiting the rotation of the friction member relative to the turning base 1 is arranged between the friction member and the turning base 1, wherein the unidirectional mechanism includes an unidirectional gear 6 and a bevel gear 7 cooperatively engaged with the unidirectional gear 6, wherein the bevel gear 7 is rotationally connected to the rotary turning base 1 around the second axis line, and the second axis line extends along the left and right direction and is arranged parallel to the first axis line; and an elastic member further arranged between the bevel gear 7 and the turning base 1, wherein the bevel gear 7 rotates around the second axis line in a direction tending to the unidirectional gear 6 by the elastic member. The elastic member in the present embodiment is a torsion spring 8, wherein one end part of the torsion spring 8 abuts against turning base 1, and the other end part abuts against the bevel gear 7. The bevel gear 7 is arranged below the unidirectional gear 6, and the torsion spring 8 provides an elastic force that pushes the bevel gear 7 to rotate clockwise upwardly around the second axis line. A linkage structure is arranged between the unidirectional gear 6 and the friction member, wherein the unidirectional gear 6 rotates synchronously around the first axis line with the friction member by the linkage structure. The linkage structure consists of one or more holes 45 and one or more bumps 61, wherein the holes 45 are arranged on one of the friction member and the unidirectional gear 6, and the bumps 61 are arranged on the other of the friction member and the unidirectional gear 6, wherein the bumps 61 are snapped in the holes 45. In the embodiment, the side wall of the friction member 43 is provided with three holes 45, and the unidirectional gear 6 has three bumps 61 mating with the three holes 45.

The connection member passes through the panel assembly 2, the positioning member, and the clamping member in the left and right direction towards upside in sequence, wherein the connection member is specifically a bolt, and the clamping member is provided with thread screws matching with the bolt. The clamping member can be tightly snapped in the snapping space 37 in the left and right direction by providing the connection member, so as to further ensure that the outer surface of the inner wall 351 of the positioning member is in frictional contact with the friction member.

In the embodiment, the positioning member includes a left positioning member 31 and a right positioning member 32; the clamping member includes a left clamping member 51 and a right clamping member 52; the friction member includes a left friction member 41 and a right friction member 42; the connection member includes a left connection member 91 and a right connection member 92; and the panel assembly has a left mating groove 21 cooperating with the left positioning member 31 and a right mating groove 22 cooperating with the right positioning member 32, wherein the left connection member 91 passes through the left side of the panel assembly 2, the left positioning member 31, and the left clamping member 51 in sequence, and the right connection member 92 passes through the right side of the panel assembly 2, the right positioning member 32, and the right clamping member 52 in sequence. It can also provide one group of the positioning member, the clamping member, the friction member, and the connection member in other embodiments.

The unidirectional mechanism in the embodiment cooperates with the left friction member 41 and the right friction member 42 respectively, so as to synchronously limit the rotation of the left friction member 41 and the right friction member 42 relative to the turning base 1, i.e., a bump 61 cooperating with the left friction member 41 is arranged at the left side of the unidirectional gear 6, and a bump 61 cooperating with the right friction member 42 is arranged at right side of the unidirectional gear 6.

The working principle of the display up-and-down adjustment assembly of the present invention is as follows.

The turning base 1 and the panel assembly 2 are rotationally connected around the first axis line so as to switch between the rotating up state and the rotating down state. When switching to the rotating up state, the panel assembly 2 is manually operated to rotate clockwise, wherein the positioning member and the panel assembly 2 rotate synchronously due to providing the mating structure between the positioning member and the panel assembly 2; the clamping member and the positioning member rotate synchronously due to providing the synchronous structure between the positioning member and the clamping member; the friction member and the positioning member rotate in the same direction since the outer surface of the inner wall 351 is in frictional contact with the friction member; and the unidirectional gear 6 and the friction member rotate synchronously due to providing the linkage structure between the friction member and the unidirectional gear 6. Under the downward force of the unidirectional gear 6, the bevel gear 7 rotates counterclockwise around the second axis line to avoid it; the torsion spring 8 accumulates the elastic force; and the torsion spring 8 rebounds to stop the further clockwise rotation of the unidirectional gear 6, i.e. when switching to the rotating up state, the user needs to resist the gravity and the elastic force of torsion spring 8. When switching to the rotating down state, the panel assembly 2 is manually operated to rotate counterclockwise, wherein the positioning member and the panel assembly 2 rotate synchronously due to providing the mating structure between the positioning member and the panel assembly 2; the clamping member and the positioning member rotate synchronously due to providing the synchronous structure between the positioning member and the clamping member; the bevel gear 7 prevents the unidirectional gear 6 from rotating counterclockwise due to providing the unidirectional mechanism between the friction member and the turning base 2; and since the linkage structure is arranged between the unidirectional gear 6 and the friction member, the friction member cannot rotate counterclockwise, but is fixed relative to the unidirectional gear and the turning base, i.e., when switching to the rotating down state, although it can be assisted by the gravity, the user needs to resist the friction between the outer surface of the inner wall 351 and the friction member.

The above embodiments are only to illustrate the technical concepts and features of the present invention, and are intended to enable persons familiar with the technology to understand the contents of the present invention and to implement them accordingly, and it is not to limit the scope of protection of the present invention in this way. Any equivalent changes or modifications made in accordance with the spirit and substance of the present invention shall be covered by the scope of protection of the present invention.

### Industrial Applicability

The present invention discloses a display up-and-down adjustment assembly, including a turning base, a panel assembly, and an adjustment structure, wherein the adjustment structure includes a positioning member, a clamping member, and a friction member. The display up-and-down adjustment assembly has a rotating up state and a rotating down state, wherein when switching to the rotating up state, the positioning member, the friction member, the clamping member, and the panel assembly rotate in the same direction; and when switching to the rotating down state, the positioning member, the clamping member, and the panel assembly rotate in the same direction, and the unidirectional mechanism limiting the rotation of the friction member relative to the turning base is arranged between the friction member and the turning base. Since the friction member and the positioning member do not rotate synchronously, the user needs to overcome the frictional resistance between the friction member and the positioning member with the assistance of the gravity of the display. In this way, it is easier when switching to the rotating up state, and it also reduces the difference of output forces between switching to the rotating up state and switching to the rotating down state, which improves the user experience.

## Claims

1. A display up-and-down adjustment assembly, **characterized by** comprising a turning base arranged on a supporting base, a panel assembly configured to mount the display, and an adjustment structure arranged between the turning base and the panel assembly, wherein the adjustment structure comprises a positioning member, a clamping member, and a friction member; the positioning member has an outer wall and an inner wall; and an accommodation space is arranged between the outer wall and the inner wall, wherein the friction member is at least partially snapped in the accommodation space; the inner wall has an outer surface of the inner wall and an inner surface of the inner wall arranged opposite to the outer surface of the inner wall; and the clamping member is snapped in the positioning member and abuts against the inner surface of the inner wall, so that the outer surface of the inner wall is in frictional contact with the friction member, wherein the display up-and-down adjustment assembly has a rotating up state and a rotating down state, and the turning base and the panel assembly are rotationally connected around a first axis line so as to switch between the rotating up state and the rotating down state, wherein when switching to the rotating up state, the positioning member, the friction member, the clamping member, and the panel assembly rotate in the same direction; and when switching to the rotating down state, the positioning member, the clamping member, and the panel assembly rotate in the same direction, wherein an unidirectional mechanism limiting a rotation of the friction member relative to the turning base is arranged between the friction member and the turning base.

2. The display up-and-down adjustment assembly according to claim 1, wherein the positioning member comprises a side wall extending in an up and down direction, an outer wall extending in a left and right direction, and an inner wall extending in a right and left direction, wherein end parts of the outer wall and the inner wall in the left and right direction are connected to the side wall respectively.

3. The display up-and-down adjustment assembly according to claim 2, wherein a cross section of the side wall is of a circle, wherein a cross section of the outer wall is a circular ring formed by centering on a center of the circle, and a cross section of the inner wall is a circular arc formed by centering on the center of the circle.

4. The display up-and-down adjustment assembly according to claim 3, wherein two circular arcs are provided, and two notches are formed between the two circular arcs, wherein the clamping member is provided with two protrusion parts respectively snapped in the two notches.

5. The display up-and-down adjustment assembly according to any one of claims 1 to 4, wherein the unidirectional mechanism comprises an unidirectional gear and a bevel gear cooperatively engaged with the unidirectional gear, wherein a linkage structure is arranged between the unidirectional gear and the friction member, wherein the unidirectional gear rotates synchronously around the first axis line with the friction member by the linkage structure; the bevel gear is rotationally connected to the turning base around a second axis line; and an elastic member further arranged between the bevel gear and the turning base, wherein the bevel gear rotates around the second axis line by the elastic member in a direction tending to the unidirectional gear.

6. The display up-and-down adjustment assembly according to claim 5, wherein the positioning member, the friction member, the clamping member, the unidirectional gear, and the panel assembly rotate in the same direction when switching to the rotating up state, and the friction member and the unidirectional gear are fixed relative to the turning base when switching to the rotating down state.

7. The display up-and-down adjustment assembly according to claim 5 or 6, wherein the first axis line extends in the left and right direction.

8. The display up-and-down adjustment assembly according to any one of claims 5 to 7, wherein the second axis line extends in the left and right direction.

9. The display up-and-down adjustment assembly according to any one of claims 5 to 8, wherein the first axis line and the second axis line are arranged in parallel.

10. The display up-and-down adjustment assembly according to any one of claims 5 to 9, wherein the linkage structure consists of one or more holes and one or more bumps, wherein the holes are arranged on one of the friction member and the unidirectional gear, and the bumps are arranged on the other of the friction member and the unidirectional gear, wherein the bumps are snapped in the holes.

11. The display up-and-down adjustment assembly according to any one of claims 1 to 10, wherein a mating structure is arranged between the panel assembly and the positioning member, wherein the mating structure consists of a mating groove arranged on one of the panel assembly and the positioning member and a mating bump arranged on the other of the two.

12. The display up-and-down adjustment assembly according to any one of claims 1 to 11, wherein the display up-and-down adjustment assembly further comprises a connection member, and the connection member passes through the panel assembly, the positioning member, and the clamping member in the left and right direction in sequence.

13. The display up-and-down adjustment assembly according to any one of claims 1 to 12, wherein the positioning member comprises a left positioning member and a right positioning member; the clamping member comprises a left clamping member and a right clamping member; and the friction member comprises a left friction member and a right friction member, wherein the unidirectional mechanism cooperates with the left friction member and the right friction member respectively, so as to synchronously limit a rotation of the left friction member and the right friction member relative to the turning base.
